# EUROPEAN PATENT APPLICATION

(11) **EP 4 772 866 A1**
(43) Date of publication of application: **08.07.2026**
(21) Application number: 24860005.8
(22) Date of filing: 30.08.2024
(51) Int. Cl.: G01N 23/223, G01N 23/2204, G01N 23/2209

(54) **FLUORESCENT X-RAY ANALYSIS DEVICE, INFORMATION STORAGE MEDIUM, AND PROGRAM**

(30) Priority: 01.09.2023 JP 2023142433
(71) Applicant: Rigaku Corporation, Akishima-shi Tokyo 196-8666 (JP)
(72) Inventor: HARA, Shinya, Takatsuki-shi, Osaka 569-1146 (JP); MATSUO, Takashi, Takatsuki-shi, Osaka 569-1146 (JP); OKAZAKI, Natsumi, Takatsuki-shi, Osaka 569-1146 (JP); YAMADA, Yasujiro, Takatsuki-shi, Osaka 569-1146 (JP)
(74) Representative: Lambacher, Michael
(86) International application number: PCT/JP2024/031412
(87) International publication number: WO 2025/047980

(57) **Abstract**

Measurement can be performed in a state where a sample chamber is filled with air, and a partition film and a component arranged in an irradiation chamber are prevented from being damaged. An X-ray fluorescence spectrometer includes: a sample chamber in which a sample is to be arranged; an irradiation chamber divided from the sample chamber by a partition wall partially including a partition film which transmits X-rays, the irradiation chamber having arranged therein an X-ray source configured to emit X-rays to the sample via the partition film; and an information processing device. The information processing device includes: an irradiation time acquisition unit configured to acquire an irradiation time for which the partition film is irradiated with the X-rays; and a control unit configured to perform protection control of protecting the partition film from irradiation with the X-rays based on the irradiation time acquired by the irradiation time acquisition unit.

## Description

### Technical Field

The present invention relates to an X-ray fluorescence spectrometer, an information storage medium, and a program.

### Background Art

As an apparatus for analyzing an element contained in a sample, an X-ray fluorescence spectrometer has been known. The X-ray fluorescence spectrometer irradiates a sample with primary X-rays, and performs analysis based on an intensity and energy of fluorescent X-rays exiting the sample. There has also been known a simple X-ray fluorescence spectrometer having a structure in which a sample chamber and an irradiation chamber are separated from each other by a partition membrane so that a sample can be easily replaced while the irradiation chamber is kept in a helium atmosphere (see Patent Literature 1).

### Citation List

### Patent Literature

[PTL 1] WO 2004/088296 A1

### Summary of Invention

### Technical Problem

In a case of performing simple measurement, it is desired that the sample chamber have an atmospheric pressure. A gas to be loaded in the sample chamber is generally helium or air. Helium has low absorbance of X-rays, and hence even fluorescent X-rays that exit light elements and have low energy can be measured with good sensitivity, but the distribution cost is high. Meanwhile, air contains oxygen, and hence X-rays generate ozone in the sample chamber at the time of measurement. Ozone deteriorates the partition film, and hence the partition film is damaged in some cases. When the partition film is damaged, there is a fear that the inside of the apparatus will be contaminated by the sample or the like.

The present disclosure has been made in view of the above-mentioned problems, and has an object to provide an X-ray fluorescence spectrometer with which damage of a partition film and damage or contamination of a component arranged in an irradiation chamber can be prevented.

### Solution to Problem

(1) According to one aspect of the present disclosure, there is provided an X-ray fluorescence spectrometer including: a sample chamber in which a sample is to be arranged; an irradiation chamber divided from the sample chamber by a partition wall partially including a partition film which transmits X-rays, the irradiation chamber having arranged therein an X-ray source configured to emit X-rays to the sample via the partition film; and an information processing device, wherein the information processing device includes: an irradiation time acquisition unit configured to acquire an irradiation time for which the partition film is irradiated with the X-rays; and a control unit configured to perform protection control of protecting the partition film from irradiation with the X-rays based on the irradiation time acquired by the irradiation time acquisition unit.
(2) In the X-ray fluorescence spectrometer according to another aspect of the present disclosure, the information processing device includes a replacement information acquisition unit configured to acquire replacement information representing that the partition film has been replaced, the irradiation time acquisition unit is configured to measure a cumulative irradiation time that is a cumulative time for which the partition film is irradiated with the X-rays from when the replacement information has been acquired, and the control unit is configured to perform the protection control when the cumulative irradiation time exceeds a first setting value.
(3) In the X-ray fluorescence spectrometer according to another aspect of the present disclosure, the irradiation time acquisition unit is configured to measure a continuous irradiation time that is a time for which the X-rays are continuously applied from when the irradiation of the partition film with the X-rays has started, and the control unit is configured to perform the protection control when the continuous irradiation time exceeds a second setting value.
(4) In the X-ray fluorescence spectrometer according to another aspect of the present disclosure, the information processing device includes a measurement condition acquisition unit configured to acquire a measurement condition including a measurement time, the irradiation time acquisition unit is configured to calculate, based on the measurement time included in the acquired measurement condition, a predicted continuous irradiation time predicted as a time for which the partition film is irradiated with the X-rays through measurement performed in accordance with the measurement condition, and the control unit is configured to perform the protection control based on the predicted continuous irradiation time.
(5) In the X-ray fluorescence spectrometer according to another aspect of the present disclosure, the information processing device further includes: a replacement information acquisition unit configured to acquire replacement information representing that the partition film has been replaced; and a storage unit configured to store a cumulative irradiation time that is a cumulative time for which the partition film is irradiated with the X-rays from when the replacement information was acquired, the irradiation time acquisition unit is configured to calculate a predicted cumulative irradiation time by adding the predicted continuous irradiation time to the cumulative irradiation time stored in the storage unit, and the control unit is configured to perform the protection control when the predicted cumulative irradiation time exceeds a first setting value.
(6) In the X-ray fluorescence spectrometer according to another aspect of the present disclosure, the control unit is configured to perform the protection control when the predicted continuous irradiation time exceeds a second setting value.
(7) In the X-ray fluorescence spectrometer according to another aspect of the present disclosure, the protection control is control that prevents measurement from being started.
(8) In the X-ray fluorescence spectrometer according to another aspect of the present disclosure, the X-ray fluorescence spectrometer further includes a shutter configured to isolate, in a closed state, the sample chamber and the irradiation chamber from each other and block the X-rays, and the irradiation time acquisition unit is configured to measure a time for which the X-ray source emits the X-rays and the shutter is open as the irradiation time.
(9) In the X-ray fluorescence spectrometer according to another aspect of the present disclosure, the protection control is control of closing the shutter.
(10) In the X-ray fluorescence spectrometer according to another aspect of the present disclosure, the protection control is control of causing the X-ray source to stop emission of the X-rays.
(11) In the X-ray fluorescence spectrometer according to another aspect of the present disclosure, the information processing device includes a display unit configured to perform display based on control of the control unit, and the protection control is control of causing the display unit to display that the partition film has a possibility of being damaged.
(12) In the X-ray fluorescence spectrometer according to another aspect of the present disclosure, the replacement information includes information representing a material and/or a thickness of the replaced partition film, and the first setting value and/or the second setting value is set based on the information representing the material and/or the thickness.
(13) In the X-ray fluorescence spectrometer according to another aspect of the present disclosure, the display unit is further configured to display the cumulative irradiation time and/or the continuous irradiation time.
(14) According to another aspect of the present disclosure, there is provided a non-transitory computer-readable information storage medium having stored thereon a program to be executed by a computer used for an X-ray fluorescence spectrometer, the X-ray fluorescence spectrometer including: a sample chamber in which a sample is to be arranged; an irradiation chamber divided from the sample chamber by a partition wall partially including a partition film which transmits X-rays, the irradiation chamber having arranged therein an X-ray source configured to emit X-rays to the sample via the partition film; and the computer, the program causing the computer to execute: an irradiation time acquisition step of acquiring an irradiation time for which the partition film is irradiated with the X-rays; and a protection control step of performing protection control of protecting the partition film from irradiation with the X-rays based on the irradiation time acquired in the irradiation time acquisition step.
(15) According to another aspect of the present disclosure, there is provided a program to be executed by a computer used for an X-ray fluorescence spectrometer, the X-ray fluorescence spectrometer including: a sample chamber in which a sample is to be arranged; an irradiation chamber divided from the sample chamber by a partition wall partially including a partition film which transmits X-rays, the irradiation chamber having arranged therein an X-ray source configured to emit X-rays to the sample via the partition film; and the computer, the program causing the computer to execute: an irradiation time acquisition step of acquiring an irradiation time for which the partition film is irradiated with the X-rays; and a protection control step of performing protection control of protecting the partition film from irradiation with the X-rays based on the irradiation time acquired in the irradiation time acquisition step.

### Advantageous Effects of Invention

According to the present disclosure, damage of the partition film and damage and contamination of the component arranged in the irradiation chamber can be prevented.

### Brief Description of Drawings

FIG. 1 is a view illustrating an outline of an X-ray fluorescence spectrometer.
FIG. 2 is a diagram illustrating a hardware configuration of an information processing device.
FIG. 3 is a view illustrating an example of an image representing a state of the X-ray fluorescence spectrometer.
FIG. 4 is a view illustrating an example of an error image.
FIG. 5 is a diagram illustrating functional blocks of the information processing device.
FIG. 6 is a view illustrating an example of a partition film replacement image.
FIG. 7 is an example of a flow chart to be executed by the X-ray fluorescence spectrometer at the time of measurement.
FIG. 8 is an example of a flow chart for determining whether an executable measurement condition is included in a measurement recipe.
FIG. 9 is a flow chart for measuring an irradiation time.
FIG. 10 is a flow chart illustrating first protection control.
FIG. 11 is a flow chart to be executed when the partition film is replaced.
FIG. 12 is a flow chart illustrating second protection control.

### Description of Embodiments

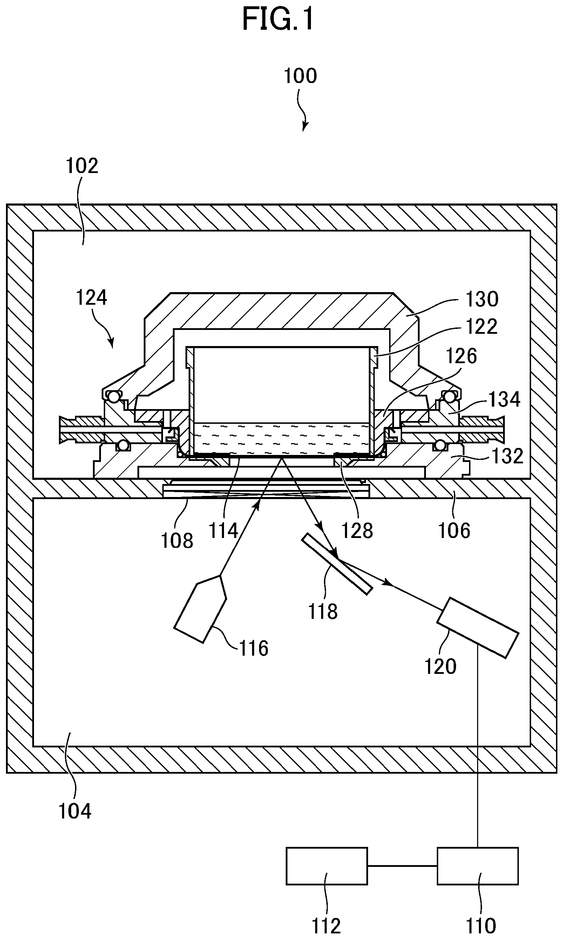

Now, a preferred embodiment for carrying out the present invention (hereinafter referred to as "embodiment") will be described with reference to the drawings. FIG. 1 is a view illustrating an outline of an X-ray fluorescence spectrometer 100. As illustrated in FIG. 1, the X-ray fluorescence spectrometer 100 includes a sample chamber 102, an irradiation chamber 104, a division wall 106, a shutter 108, a counter 110, and an information processing device 112. The sample chamber 102 and the irradiation chamber 104 are divided by a partition wall including the division wall 106, so as to prevent a gas from moving therebetween. The division wall 106 has an opening formed to allow X-rays to pass therethrough from the irradiation chamber 104 to the sample chamber 102.

The irradiation chamber 104 is divided from the sample chamber 102 by the partition wall partially including a partition film 114 which transmits X-rays. Specifically, for example, the irradiation chamber 104 is kept under a vacuum environment, and has an X-ray source 116, a spectroscopic device 118, and a detector 120 arranged therein. The X-ray source 116 emits X-rays to a sample via the partition film 114. The sample irradiated with the X-rays emits fluorescent X-rays. The spectroscopic device 118 disperses fluorescent X-rays having a predetermined wavelength emitted from the sample. The detector 120 is arranged at a position at which the fluorescent X-rays dispersed by the spectroscopic device 118 enter the detector 120. The detector 120 detects the fluorescent X-rays and outputs a pulse signal. The detector 120 is, for example, a proportional counter. The counter 110 counts the pulse signal output from the detector 120 to acquire the count as an intensity of the fluorescent X-rays. Data indicating the intensity of the fluorescent X-rays counted by the counter 110 is transmitted to the information processing device 112.

The spectroscopic device 118 and the detector 120 may be provided for each element to be analyzed, or one pair of the spectroscopic device 118 and the detector 120 may be configured to rotationally move. When one pair of the spectroscopic device 118 and the detector 120 is rotationally moved, a mechanism (goniometer) for rotationally moving the spectroscopic device 118 and the detector 120 is arranged in the irradiation chamber 104. Further, the X-ray fluorescence spectrometer 100 illustrated in FIG. 1 is a wavelength-dispersive X-ray fluorescence spectrometer, but may be an energy-dispersive X-ray fluorescence spectrometer. It is desired that the inside of the irradiation chamber 104 be a vacuum to prevent the X-rays emitted from the X-ray source 116 from being absorbed. However, the inside of the irradiation chamber 104 may be air or a helium atmosphere depending on the element to be analyzed.

A sample cell 122 is arranged in the sample chamber 102. Specifically, a sample base 124 is provided in the sample chamber 102, and the sample cell 122 is arranged in the sample base 124. The inside of the sample chamber 102 is filled with air or helium. The sample may be liquid or a solid (including powder), but a case where the sample is liquid is described in the following. The liquid sample is arranged in the sample cell 122. The sample cell 122 has a cylindrical shape, and has a sample holding film attached thereto so as to close a bottom surface thereof. The liquid sample is arranged on the sample holding film. Further, an upper surface of the sample cell 122 may be hermetically sealed with another film so as to prevent the sample from spilling. The inside of the sample chamber 102 may be air, and helium may be caused to flow between the sample holding film and the partition film 114. Further, when the sample is a solid, the inside of the sample chamber 102 may be put into a vacuum state.

As an example, the sample base 124 includes a window frame holding member, a window frame member 126, a film supporting member 128, and a lid member 130. The window frame holding member includes an opening for allowing X-rays to pass therethrough from the irradiation chamber 104 to the sample chamber 102, and is arranged in the sample chamber 102 to support an outer edge portion of the film supporting member 128 and an outer edge portion of the window frame member 126 from below. Specifically, the window frame holding member includes a lower holding portion 132 and an upper holding portion 134. The lower holding portion 132 and the upper holding portion 134 each include the opening for allowing X-rays to pass therethrough from the irradiation chamber 104 to the sample chamber 102.

The lower holding portion 132 is a member to be arranged in contact on the division wall 106. The lower holding portion 132 has an outer edge formed into a substantially circular shape in top view and bottom view, and includes a circular opening at a position corresponding to the opening formed in the division wall 106. The lower holding portion 132 includes a step corresponding to an outer edge of the film supporting member 128. The film supporting member 128 is arranged so that the outer edge is positioned on the step of the lower holding portion 132. In this manner, the lower holding portion 132 supports an outer edge portion of the film supporting member 128. Further, the lower holding portion 132 supports the window frame member 126 arranged above the film supporting member 128.

The upper holding portion 134 is a member to be arranged in contact on the lower holding portion 132. The upper holding portion 134 has an outer edge formed into a substantially circular shape in top view and bottom view, and includes a circular opening having the same center position as that of the opening formed in the lower holding portion 132, and a diameter larger than that of the opening formed in the lower holding portion 132. The upper holding portion 134 includes an O-ring at a position to be in contact with the lower holding portion 132. The upper holding portion 134 supports the window frame member 126 together with the lower holding portion 132.

The window frame member 126 holds a partition film 114, and is arranged within the opening formed in the division wall 106. The partition film 114 is formed from a material that transmits X-rays, and forms a part of the partition wall. Specifically, the window frame member 126 holds the partition film 114 which is formed from a material that transmits X-rays and forms a part of the partition wall, and is arranged within the opening of the window frame holding member. The window frame member 126 includes an inner film holding member and an outer film holding member that each have a circular ring shape. The window frame member 126 is arranged within the opening of the window frame holding member in a state where the partition film 114 is sandwiched between the inner film holding member and the outer film holding member. The partition film 114 present in the opening forms a part of the partition wall.

The film supporting member 128 has an opening for allowing X-rays to pass therethrough, and is arranged adjacent to the irradiation chamber 104 side of the partition film 114 to support the partition film 114 from the irradiation chamber 104 side.

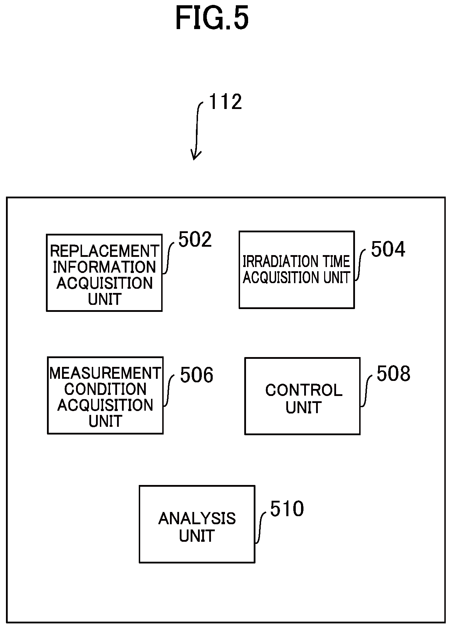

The lid member 130 hermetically seals a space in which the sample cell 122 is arranged. Specifically, as illustrated in FIG. 1, the lid member 130 has a shape that covers the space in which the sample cell 122 is arranged, and is arranged in contact with the upper holding portion 134 of the window frame holding member. The lid member 130 includes an O-ring at a position to be in contact with the upper holding portion 134. The lid member 130 is opened and closed by control of a control unit 508 (see FIG. 5) or by a user at the time of carrying the sample cell 122 in and out.

In a closed state, the shutter 108 isolates the sample chamber 102 and the irradiation chamber 104 from each other and also blocks the X-rays. Specifically, the shutter 108 is formed from a material that does not transmit X-rays, and is arranged to close the opening formed in the division wall 106. The shutter 108 is arranged on the irradiation chamber 104 side of the partition film 114. The shutter 108 is opened and closed by the control unit 508 controlling an operation of a motor. The shutter 108 in the closed state isolates the sample chamber 102 and the irradiation chamber 104 from each other. Even when the shutter 108 is in an open state, the sample chamber 102 and the irradiation chamber 104 are isolated from each other by the partition film 114.

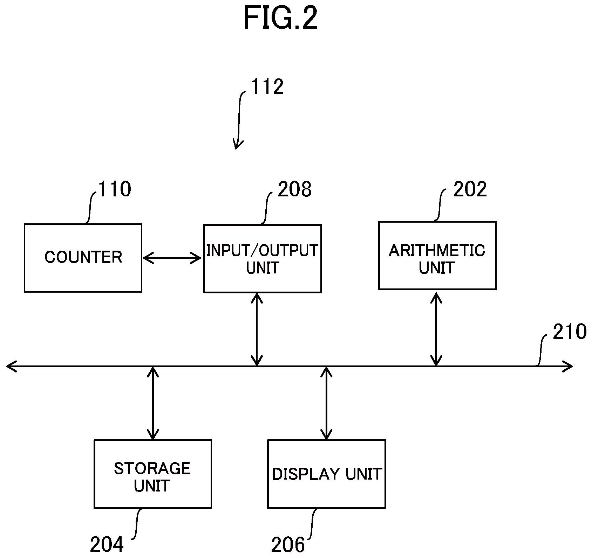

The information processing device 112 acquires the intensity of the fluorescent X-rays from the counter 110 to analyze the sample based on the intensity of the fluorescent X-rays. Further, the information processing device 112 controls the operation of each component in the irradiation chamber 104. Specifically, for example, FIG. 2 is a diagram illustrating a hardware configuration of the information processing device 112. The information processing device 112 is a computer, and includes an arithmetic unit 202, a storage unit 204, a display unit 206, an input/output unit 208, and an internal bus 210.

The arithmetic unit 202 is a central processing unit (CPU) that is a processor, and performs various arithmetic operations. For example, the arithmetic unit 202 executes various arithmetic operations for analysis of the sample or a program for measurement based on the acquired intensity of the fluorescent X-rays.

The storage unit 204 is a non-transitory computer-readable information storage medium having stored thereon a program to be executed by a computer used for the X-ray fluorescence spectrometer 100. Specifically, for example, the storage unit 204 is a random access memory (RAM) which is a memory and a device capable of statically recording information, such as a hard disk drive (HDD) or a solid state drive (SSD). The storage unit 204 stores a program for executing each step to perform protection control of protecting the partition wall. The program causes the computer to execute an irradiation time acquisition step of acquiring an irradiation time for which the partition film 114 is irradiated with X-rays, and a control step of performing protection control of protecting the partition film 114 from the irradiation with the X-rays based on the irradiation time acquired by an irradiation time acquisition unit 504. Details of the steps will be described later. Further, the storage unit 204 stores a cumulative irradiation time which is a cumulative time for which the partition film 114 is irradiated with the X-rays from when replacement information (described later) has been acquired.

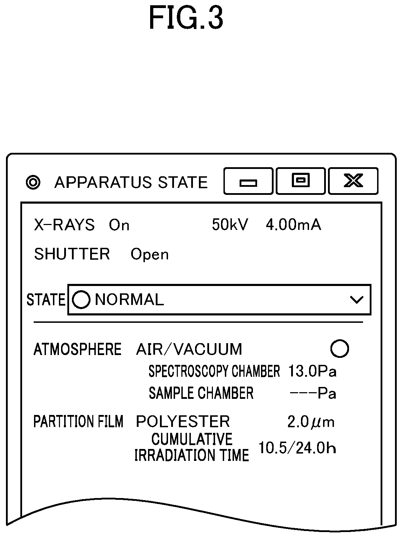

The display unit 206 is a so-called flat panel display such as a liquid crystal monitor or the like, and displays an image. For example, the display unit 206 displays a state of the apparatus based on the control of the control unit 508. Specifically, the display unit 206 displays information representing the state of the X-ray fluorescence spectrometer 100 as illustrated in FIG. 3. The information includes information representing states of the X-ray source 116 and the shutter 108, the atmospheres of the irradiation chamber 104 and the sample chamber 102, and the state of the partition film 114. The state of the X-ray source 116 is a state in which the X-ray source 116 is emitting X-rays (hereinafter referred to as "ON state"), or a state in which the X-ray source 116 is not emitting X-rays (hereinafter referred to as "OFF state"). The state of the shutter 108 is an open state or a closed state. The atmospheres of the irradiation chamber 104 and the sample chamber 102 are pressures inside the irradiation chamber 104 and the sample chamber 102. The state of the partition film 114 is the material and the thickness of the held partition film 114 and the irradiation time.

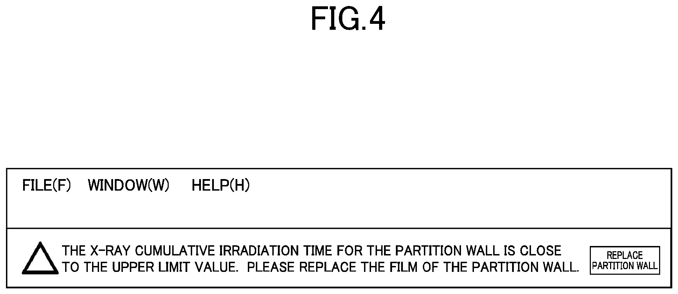

Further, the display unit 206 displays an error image and a warning image. Specifically, the error image is an image to be displayed when the cumulative irradiation time exceeds a first setting value (described later), and is an image for urging the user to replace the partition film 114 that is required to be replaced. Specifically, for example, the display unit 206 displays an error image as illustrated in FIG. 4. The error image of FIG. 4 has a description of "The X-ray cumulative irradiation time for the partition wall is close to the upper limit value. Please replace the film of the partition wall." that is displayed below a toolbar of an application window displayed when the program for measurement is executed. Further, the error image includes a button having a description of "Replace partition wall," and, when the user clicks this button, a partition film replacement image to be described later is displayed. The warning image is an image to be displayed when a continuous irradiation time exceeds a second setting value (described later), and is an image representing that the measurement is required to be temporarily stopped.

The input/output unit 208 is one or more interfaces for allowing the computer to exchange information with an external device, and is, for example, one or more devices for allowing the user to input information, such as a keyboard, a mouse, and a touch panel. Further, the input/output unit 208 may include various ports for establishing wired connection, and a controller for establishing wireless connection. The input/output unit 208 acquires the intensity of the fluorescent X-rays entering the detector 120 from the counter 110.

The internal bus 210 mutually connects the arithmetic unit 202, the storage unit 204, the display unit 206, and the input/output unit 208.

FIG. 5 is a diagram for illustrating functional blocks of the information processing device 112. As illustrated in FIG. 5, the information processing device 112 functionally includes a replacement information acquisition unit 502, the irradiation time acquisition unit 504, the control unit 508, and an analysis unit 510.

The replacement information acquisition unit 502 acquires replacement information representing that the partition film 114 has been replaced. Specifically, for example, when the partition film 114 has been replaced, the replacement information acquisition unit 502 acquires replacement information including information representing the material and/or the thickness of the replaced partition film 114.

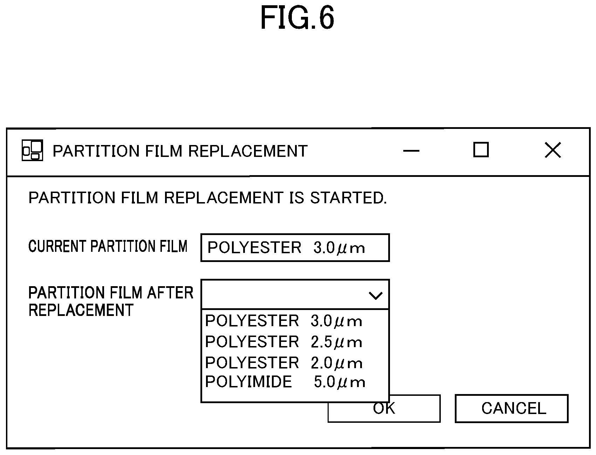

FIG. 6 is an example for illustrating an image (hereinafter referred to as "partition film replacement image") to be displayed on the display unit 206 when the partition film 114 is replaced. The partition film replacement image includes information on the partition film 114 held by the window frame member 126 before replacement (information on the current partition film 114) and a list of candidates for the partition film 114 to be newly held after replacement (information on the partition film 114 after replacement). The information on the current partition film 114 is information on the partition film 114 after replacement which has been selected at the time of previous replacement of the partition film 114. The information on the partition film 114 includes information representing the material and the thickness of the partition film 114.

As illustrated in FIG. 6, the information on the current partition film 114 represents that the material is polyester and the thickness is 3.0 µm. The list of candidates of the information on the partition film 114 after replacement includes a candidate representing that the material is polyester and the thickness is 3.0 µm, a candidate representing that the material is polyester and the thickness is 2.5 µm, a candidate representing that the material is polyester and the thickness is 2.0 µm, and a candidate representing that the material is polyimide and the thickness is 5.0 µm.

After the user replaces the partition film 114 held by the window frame member 126, the user operates the input/output unit 208 such as a mouse to select the information on the partition film 114 after replacement corresponding to the partition film 114 after replacement, from among the candidates. When an OK button of the partition film replacement image is further clicked, the replacement information acquisition unit 502 acquires replacement information including the selected information on the partition film 114.

The irradiation time acquisition unit 504 acquires the irradiation time for which the partition film 114 is irradiated with X-rays. Specifically, for example, the irradiation time acquisition unit 504 measures, as the irradiation time, the time for which the X-ray source 116 emits X-rays and the shutter 108 is open. Whether the X-ray source 116 emits X-rays or stops its operation is controlled by the control unit 508. Further, the opening and closing of the shutter 108 are controlled by the control unit 508. Accordingly, the irradiation time acquisition unit 504 can measure the time for which the X-ray source 116 emits X-rays and the shutter 108 is open. When the shutter 108 is not provided and the irradiation time for which the partition film 114 is irradiated with X-rays is controlled only through ON/OFF control of the X-ray source 116, the irradiation time acquisition unit 504 measures the time for which the X-ray source 116 is in the ON state and emits X-rays. The irradiation time is measured in units of, for example, 0.1 hour. In the following, in the embodiment, an irradiation time of 10 hours and 30 minutes is expressed as 10.5 H or the like.

In the present disclosure, the irradiation time includes two irradiation times, namely a cumulative irradiation time and a continuous irradiation time. Specifically, the cumulative irradiation time is a cumulative time for which the partition film 114 is irradiated with X-rays from when the replacement information has been acquired. The cumulative irradiation time is set to an initial value (for example, 0.0 hours) when the replacement information is acquired. The cumulative irradiation time is stored in the storage unit 204 when the measurement is ended. As the cumulative irradiation time, every time a measurement is performed, the time for which the X-rays have been applied in the measurement is added to the stored value. That is, the cumulative irradiation time is a total time of irradiation times for all measurements performed after the initial value is set.

The continuous irradiation time is a time for which X-rays are continuously applied from when the irradiation of the partition film 114 with the X-rays has started. Specifically, the continuous irradiation time is the time for which the partition film 114 is irradiated with X-rays in one measurement. For example, the X-ray source 116 starts emission of X-rays in a state in which the shutter 108 is closed. Then, after the intensity of the X-rays emitted by the X-ray source 116 becomes stable, the shutter 108 is opened and the sample is irradiated with X-rays. After that, after a predetermined measurement time has elapsed, the shutter 108 is closed. The continuous irradiation time is the time from when the shutter 108 is opened to when the shutter 108 is closed. When air is present around the partition film 114, for example, as the continuous irradiation time becomes longer in a state where the lid member 130 is closed, the ozone concentration becomes higher, and the deterioration of the partition film 114 is promoted.

Further, the irradiation time acquisition unit 504 calculates, based on a measurement time included in an acquired measurement condition (described later), a predicted continuous irradiation time predicted as a time for which the partition film 114 is irradiated with X-rays through measurement performed in accordance with the measurement condition. Specifically, for example, the irradiation time acquisition unit 504 acquires the measurement time included in the acquired measurement condition as the predicted continuous irradiation time. Further, for example, the irradiation time acquisition unit 504 adds the measurement time included in the acquired measurement condition to the cumulative irradiation time stored in the storage unit 204 to acquire the predicted cumulative irradiation time.

That is, the irradiation time includes two irradiation times that are an actual-result irradiation time measured at the time of actual measurement, and a predicted irradiation time acquired through calculation. The actual-result irradiation time is a value obtained by measuring the time for which the X-rays are emitted and the shutter 108 is open, and the predicted irradiation time is a value calculated based on the measurement time included in the measurement condition. Accordingly, the cumulative irradiation time includes the actual-result cumulative irradiation time and the predicted cumulative irradiation time. Further, the continuous irradiation time includes the actual-result continuous irradiation time and the predicted continuous irradiation time.

A measurement condition acquisition unit 506 acquires the measurement condition including the measurement time. Specifically, for example, when a program for analyzing a sample is executed, the display unit 206 displays a screen (not shown) for receiving input of the measurement condition. The measurement condition includes a cell identification number for identifying an arrangement position of the sample cell 122 in a preparation chamber (not shown), and conditions such as a voltage of the X-ray source 116 and the measurement time associated with the cell identification number. The measurement condition may also include other conditions related to the measurement. When the user inputs the measurement condition through use of a keyboard or the like, the measurement condition acquisition unit 506 acquires the measurement condition. Each measurement condition is assigned a measurement identification number (hereinafter referred to as "measurement ID") to distinguish the measurement condition from other measurement conditions, and is stored in the storage unit 204. Further, when the analysis is continuously performed based on a plurality of measurement conditions, the plurality of measurement conditions may be stored in association with each other. The plurality of associated measurement conditions are also referred to as "measurement recipe" or the like.

The control unit 508 performs protection control of protecting the partition film 114 from the irradiation with X-rays based on the irradiation time acquired by the irradiation time acquisition unit 504. Specifically, the control unit 508 performs the protection control when the cumulative irradiation time exceeds the first setting value. The first setting value is set based on the information representing the material and/or the thickness of the partition film 114. The first setting value is a value representing time. For example, a value of 24 H is set as the first setting value corresponding to the partition film 114 having a material of polypropylene and a thickness of 3.0 µm. The first setting value is set to a larger value the more resistant the material of the partition film 114 is to X-rays or ozone. Further, the first setting value is set to a larger value with increased thickness of the partition film 114. The relationship between the first setting value and the information representing the material and/or the thickness of the partition film 114 is stored in advance in the storage unit 204.

Further, the control unit 508 performs protection control based on the continuous irradiation time (actual-result continuous irradiation time or predicted continuous irradiation time). Specifically, for example, the control unit 508 performs the protection control when the continuous irradiation time (actual-result continuous irradiation time or predicted continuous irradiation time) exceeds the second setting value. The second setting value is a value representing one time set in advance. For example, a value of 1 H is set as the second setting value. The second setting value may be set to a different value for each item of information based on the information representing the material and/or the thickness of the partition film 114, similarly to the first setting value.

The control unit 508 performs protection control for protecting the partition film 114 from the irradiation with X-rays. For example, the protection control is control that prevents measurement from being started. Specifically, the control unit 508 avoids measurement that may damage the partition film 114 in advance by preventing the measurement from being performed for some or all of the measurement conditions included in the measurement recipe based on the predicted irradiation time. For example, the control unit 508 controls the measurement condition acquisition unit 506 so as not to receive the input of the measurement condition or an instruction to start the measurement. In this manner, the registration of the measurement ID or the pressing of the measurement start button is disabled to prevent the measurement from being performed.

Further, for example, the protection control is control of closing the shutter 108. Specifically, the control unit 508 performs control of closing the shutter 108 when the cumulative irradiation time exceeds the first setting value and/or when the continuous irradiation time exceeds the second setting value. Further, for example, the protection control is control of causing the X-ray source 116 to stop emission of X-rays. Specifically, the control unit 508 performs control of causing the X-ray source 116 to stop emission of X-rays when the cumulative irradiation time exceeds the first setting value and/or when the continuous irradiation time exceeds the second setting value. Further, for example, the protection control is control of causing the display unit 206 to display that the partition film 114 has a possibility of being damaged. Specifically, the control unit 508 causes the display unit 206 to display the error image or the warning image.

The control unit 508 may control the operation of each component of the X-ray fluorescence spectrometer 100. For example, the control unit 508 may control switching between the ON state and the OFF state of the X-ray source 116, the opening and closing of the lid member 130, the conveyance of the sample cell 122, the operation of the pump for vacuuming the irradiation chamber 104, the orientation of the spectroscopic device 118, and the like.

The analysis unit 510 analyzes the sample. Specifically, the analysis unit 510 analyzes the elements contained in the sample based on the intensity of the fluorescent X-rays acquired from the input/output unit 208.

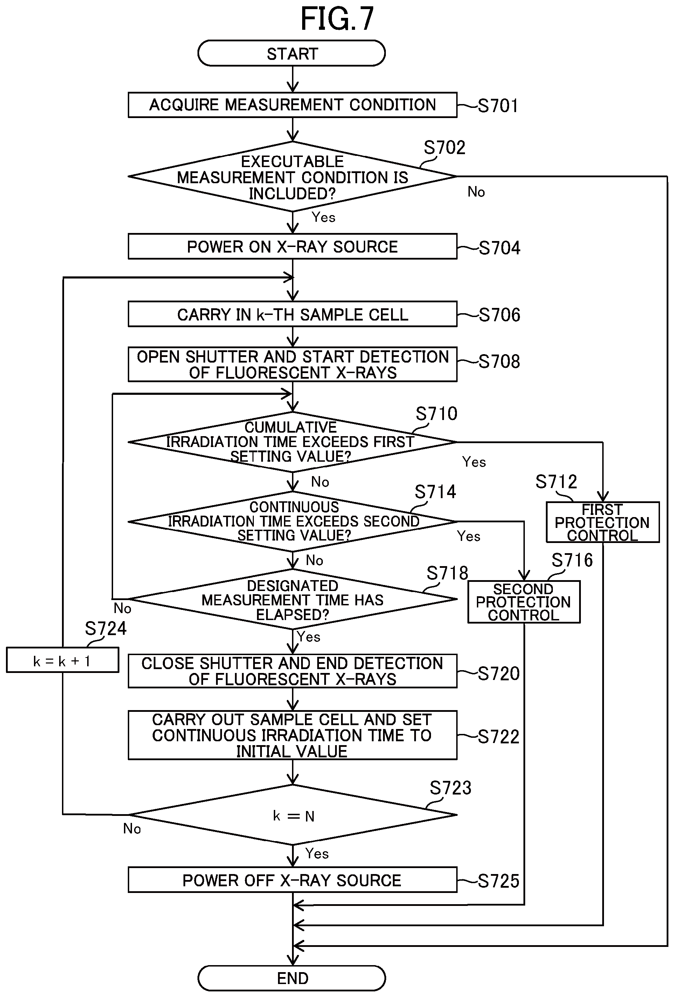

Subsequently, the protection control performed by the control unit 508 will be described with reference to the flow charts illustrated in FIG. 7 to FIG. 12. It is assumed that the user has arranged, in the preparation chamber (not shown), the sample cell 122 in which the sample has been arranged in advance.

First, the measurement condition acquisition unit 506 acquires the measurement condition (Step S701). Specifically, for example, the control unit 508 executes a program for analyzing the sample to cause the display unit 206 to display the screen (not shown) for receiving the measurement condition and the measurement instruction. When the user inputs a measurement condition such as the measurement time through use of the keyboard or the like, the measurement condition acquisition unit 506 acquires the measurement condition. Further, when the user gives an instruction to start the measurement through use of the mouse or the like, the control unit 508 acquires the measurement instruction. Each of the following steps is executed by the above-mentioned program. Further, it is assumed in this case that the measurement condition acquisition unit 506 has acquired a measurement recipe including M measurement conditions having measurement IDs of from 1 to M.

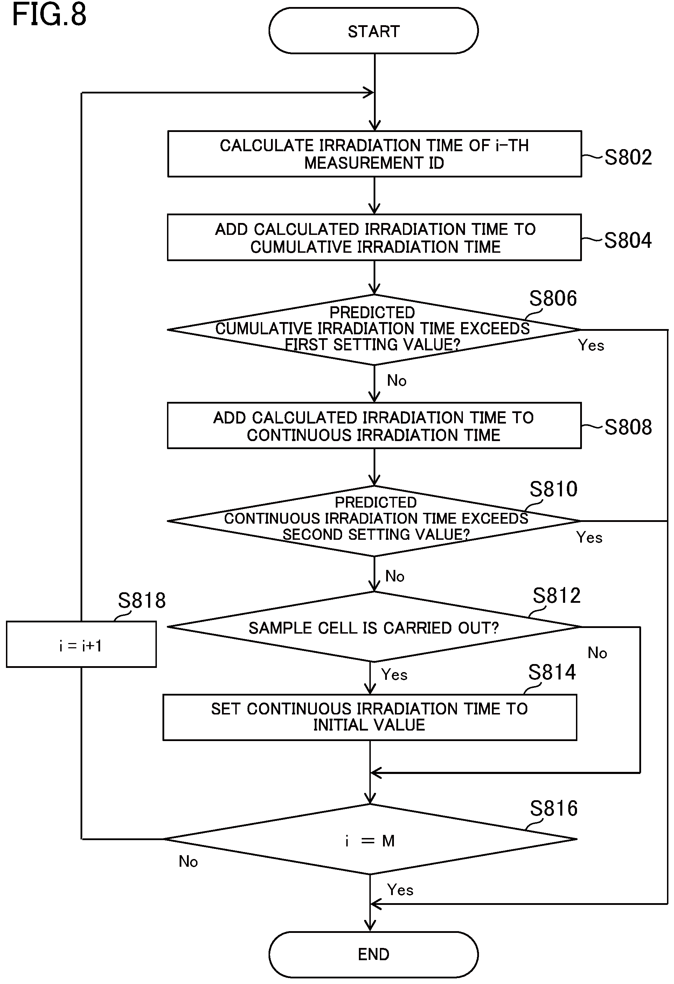

Next, the control unit 508 determines whether an executable measurement condition is included (Step S702). Specifically, FIG. 8 is a flow chart for determining whether an executable measurement condition is included in the measurement recipe. It is assumed that, at the time point of the start of the flow chart of FIG. 8, variables "i" and "k" are 1, and the continuous irradiation time is set to the initial value (zero value). Further, it is assumed that the initial value of the predicted cumulative irradiation time is the cumulative irradiation time stored in the storage unit 204. First, the irradiation time is calculated based on the i-th (first in the initial state) measurement condition (Step S802). The calculated irradiation time may be, for example, the measurement time included in the measurement condition, or may be a value obtained by multiplying the measurement time included in the measurement condition by a predetermined coefficient or adding a predetermined value to the measurement time included in the measurement condition.

Next, the irradiation time acquisition unit 504 adds the calculated irradiation time to the cumulative irradiation time to acquire the predicted cumulative irradiation time (Step S804). For example, when "i" is 1, the irradiation time acquisition unit 504 adds the measurement time included in the first measurement condition to the cumulative irradiation time stored in the storage unit 204, and acquires the calculated value as the predicted cumulative irradiation time.

Next, it is determined whether or not the predicted cumulative irradiation time exceeds the first setting value (Step S806). For example, when the first setting value is 24 H, it is determined that the predicted cumulative irradiation time exceeds the first setting value when the predicted cumulative irradiation time exceeds 24 H. When the predicted cumulative irradiation time exceeds the first setting value, the execution of the flow chart of FIG. 8 is ended.

Next, the irradiation time acquisition unit 504 adds the calculated irradiation time to the continuous irradiation time to acquire the predicted continuous irradiation time (Step S808). For example, when "i" is 1, the irradiation time acquisition unit 504 adds the measurement time included in the first measurement condition to the continuous irradiation time that has the initial value (zero value), and acquires the calculated value as the predicted continuous irradiation time.

Next, it is determined whether or not the predicted continuous irradiation time exceeds the second setting value (Step S810). For example, when the second setting value is 1 H, it is determined that the predicted continuous irradiation time exceeds the second setting value when the predicted continuous irradiation time exceeds 1 H. When the predicted continuous irradiation time exceeds the second setting value, the execution of the flow chart of FIG. 8 is ended.

Next, when the sample cell 122 is carried out after the measurement based on the i-th measurement condition is executed (Yes in Step S812), the continuous irradiation time is set to the initial value (zero value) (Step S814) and the process proceeds to Step S816. Meanwhile, when the sample cell 122 is not carried out after the measurement based on the i-th measurement condition is executed (No in Step S812), the process proceeds to Step S816. Whether or not to carry out the sample cell 122 is determined based on whether the same sample or different samples are to be continuously measured. Specifically, for example, when the cell identification number included in the i-th measurement condition and the cell identification number included in the (i+1)th measurement condition are different from each other, it is determined in Step S812 that the sample cell 122 is carried out. Meanwhile, when the cell identification number included in the i-th measurement condition and the cell identification number included in the (i+1)th measurement condition are the same, it is determined in Step S812 that the sample cell 122 is not carried out.

While the partition film 114 is irradiated with X-rays, the ozone concentration in the space on the inner side of the lid member 130 increases. The lid member 130 is opened when the sample cell 122 is carried out, and hence the ozone concentration in the space on the inner side of the lid member 130 becomes equivalent to the concentration in air every time the sample cell 122 is carried out. Thus, with the continuous irradiation time being set to the initial value (zero value) when it is determined that the sample cell 122 is carried out, the continuous irradiation time can be predicted based on the actual situation.

In Step S816, it is determined whether "i" is equal to M, that is, whether the irradiation time has been calculated for all of the measurement conditions included in the measurement recipe (Step S816). When "i" is smaller than M, 1 is added to "i" and the process returns to Step S802, and Step S802 to Step S814 are executed for the next measurement condition. The irradiation time is added to the cumulative irradiation time in Step S804 every time the process is repeatedly executed. The irradiation time is repeatedly added to the continuous irradiation time in Step S808 unless the initial value is set in Step S814. Meanwhile, when it is determined that "i" is equal to M, it is determined that all of the measurement conditions included in the measurement recipe can be executed, and the flow chart of FIG. 8 is ended.

When Yes is determined in Step S806 or Step S810, some or all of the measurement conditions included in the measurement recipe are determined to be inexecutable. Specifically, the i-th to M-th measurement conditions are determined to be inexecutable. In other words, the 1st to (i-1)th measurement conditions are determined to be executable. It is assumed that, at the end of the flow chart of FIG. 8, the number (i-1) of measurement recipes determined to be executable is N.

When it is determined in Step S702 that no executable measurement condition is included (that is, N is 0), the flow chart of FIG. 7 is ended without performing measurement. Meanwhile, when it is determined in Step S702 that an executable measurement condition is included, the control unit 508 controls the X-ray source 116 to be in the ON state (Step S704). With this control, the X-ray source 116 emits X-rays. After a certain time period elapses after the X-ray source 116 starts emission of X-rays until the intensity of the emitted X-rays is stabilized, the next step is executed.

Next, the sample cell 122 is carried in based on the k-th measurement condition (Step S706). Specifically, the control unit 508 performs control of opening the lid member 130, and causes a conveyance device (not shown) such as a robot arm to convey the sample cell 122 arranged in the preparation chamber by the user to a measurement position. At this time, the sample cell 122 arranged at a position indicated by the cell identification number included in the k-th measurement condition is conveyed. The measurement position is a position at which the sample is irradiated with X-rays, as illustrated in FIG. 1. After the sample cell 122 is arranged at the measurement position, the control unit 508 performs control of closing the lid member 130.

Next, the control unit 508 performs control of opening the shutter 108 to start detection of fluorescent X-rays (Step S708) . Specifically, the control unit 508 controls the motor to open the shutter 108. In a state where the shutter 108 is open and the X-ray source 116 emits X-rays, the sample is irradiated with X-rays via the partition film 114. Fluorescent X-rays are emitted from the sample irradiated with X-rays, and some of the fluorescent X-rays are dispersed by the spectroscopic device 118. The dispersed fluorescent X-rays are detected by the detector 120, and the intensity of the fluorescent X-rays is counted by the counter 110. The counter 110 starts transmission of the intensity of the fluorescent X-rays to the information processing device 112. The detection of the fluorescent X-rays is executed until the measurement time elapses or until the protection control is executed.

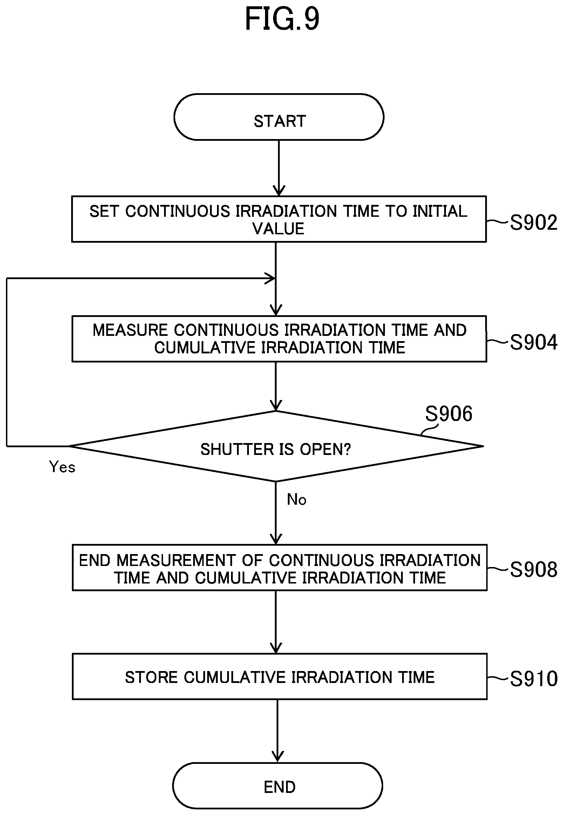

The irradiation time acquisition unit 504 starts measurement of the irradiation time when the control unit 508 opens the shutter 108. FIG. 9 is a flow chart for measuring the irradiation time. The flow chart illustrated in FIG. 9 is executed in parallel with the flow chart illustrated in FIG. 7 while the fluorescent X-rays are detected.

First, the continuous irradiation time is set to the initial value (Step S902). Specifically, the continuous irradiation time is set to 0.0 H. This step may be executed when the control unit 508 has performed the control of closing the lid member 130. Further, the control unit acquires the cumulative irradiation time stored in the storage unit 204.

Next, the irradiation time acquisition unit 504 measures the continuous irradiation time and the cumulative irradiation time (Step S904). Specifically, for example, the irradiation time acquisition unit 504 measures the difference between the current time and the time at which the shutter 108 has opened as the continuous irradiation time. Further, the irradiation time acquisition unit 504 adds the difference between the current time and the time at which the shutter 108 has opened to the cumulative irradiation time acquired from the storage unit 204 to obtain the measurement result as the cumulative irradiation time.

Step S904 is executed continuously as long as the shutter 108 is open (Yes in Step S906). When the shutter 108 is closed (No in Step S906), the irradiation time acquisition unit 504 ends the measurement of the continuous irradiation time and the cumulative irradiation time (Step S908). Further, the irradiation time acquisition unit 504 stores the cumulative irradiation time in the storage unit 204 (Step S910).

While the fluorescent X-rays are detected, the display unit 206 displays information representing the state of the X-ray fluorescence spectrometer 100 as illustrated in FIG. 3. This display allows the user to check the cumulative irradiation time. The continuous irradiation time may also be displayed in FIG. 3. Further, when the cumulative irradiation time reaches a predetermined percentage (for example, 80%) of the first setting value while Step S710, Step S714, and Step S718 are repeatedly executed, the fact that the irradiation time is coming close to the upper limit value may be displayed.

While the fluorescent X-rays are detected, determinations of Step S710, Step S714, and Step S718 are made. In Step S710, it is determined whether the cumulative irradiation time exceeds the first setting value. For example, when the first setting value is 24 H, it is determined that the cumulative irradiation time exceeds the first setting value when the cumulative irradiation time exceeds 24 H. When it is determined that the cumulative irradiation time exceeds the first setting value, first protection control (Step S712) is executed (described later) .

In Step S714, it is determined whether the continuous irradiation time exceeds the second setting value. For example, when the second setting value is 1 H, it is determined that the continuous irradiation time exceeds the second setting value when the continuous irradiation time exceeds 1 H. When it is determined that the continuous irradiation time exceeds the second setting value, second protection control (Step S716) is executed (described later).

When a designated measurement time has elapsed in a state where the cumulative irradiation time does not exceed the first setting value and the continuous irradiation time does not exceed the second setting value (Yes in Step S718), the control unit 508 performs control of closing the shutter 108 and ends the detection of the fluorescent X-rays (Step S720). Specifically, the control unit 508 controls the motor to close the shutter 108. Further, the counter 110 stops transmission of the intensity of the fluorescent X-rays to the information processing device 112. The analysis unit 510 analyzes the element contained in the sample based on the intensity of the fluorescent X-rays.

Next, the sample cell 122 is carried out, and the continuous irradiation time is set to the initial value (Step S722). Specifically, the control unit 508 performs the control of opening the lid member 130, and causes the conveyance device (not shown) such as the robot arm to convey the sample cell 122 from the measurement position to the preparation chamber. After the sample cell 122 has been arranged in the preparation chamber, the control unit 508 performs control of closing the lid member 130. Step S722 is executed only when the cell identification number included in the k-th measurement condition and the cell identification number included in the (k+1)th measurement condition are different from each other. When the cell identification number included in the k-th measurement condition and the cell identification number included in the (k+1)th measurement condition are the same, the measurement based on the (k+1)th measurement condition is continuously executed, and hence Step S722 is omitted.

In Step S723, it is determined whether "k" is equal to N, that is, whether the measurement has been completed for all of the executable measurement conditions. When "k" is smaller than N, 1 is added to "k" (Step S724) and the process returns to Step S706. Then, Step S706 to Step S722 are executed for the next measurement condition. When Step S706 to Step S722 are executed again in a case in which Step S724 is omitted, Step S706 is omitted.

When it is determined that "k" is equal to N, the control unit 508 performs control to put the X-ray source 116 in the OFF state (Step S725). With this control, the X-ray source 116 stops emission of X-rays.

Step S725 is a step to be executed when the measurement is ended without performing the protection control based on the irradiation time that is the actual-result value. When it is determined in Step S710 that the cumulative irradiation time exceeds the first setting value, the control unit 508 executes the first protection control (Step S712).

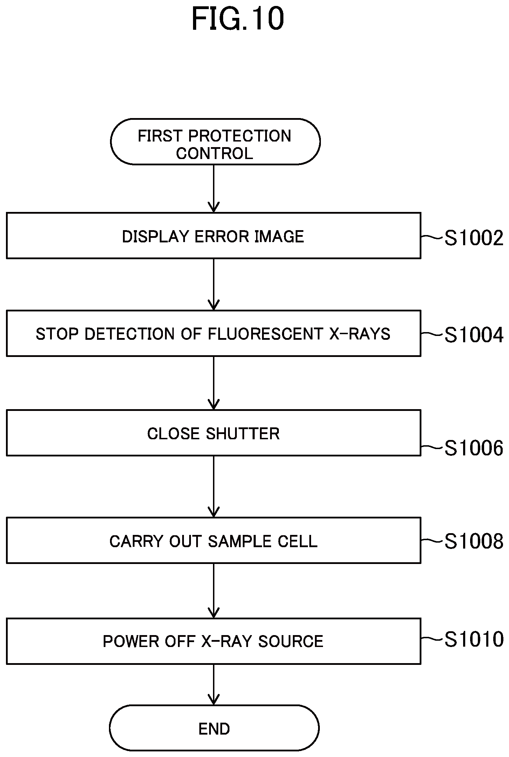

FIG. 10 is a flow chart illustrating the first protection control. First, the display unit 206 displays the error image (Step S1002). The error image displays that the user is required to replace the partition film 114.

Next, the detection of fluorescent X-rays is stopped (Step S1004). Specifically, the counter 110 stops transmission of the intensity of the fluorescent X-rays to the information processing device 112.

Next, the control unit 508 closes the shutter 108 (Step S1006), carries out the sample cell 122 (Step S1008), and puts the X-ray source 116 in the OFF state (Step S1010). Those operations can be performed in any order.

According to the present disclosure, the measurement that may damage the partition film 114 can be avoided in advance by preventing the measurement from being performed for some or all of the measurement conditions included in the measurement recipe based on the predicted irradiation time. Further, when the control unit 508 closes the shutter 108, the partition film 114 that may be damaged can be prevented from being irradiated with X-rays. Further, even when the X-ray source 116 is put in the OFF state, the partition film 114 that may be damaged can be prevented from being irradiated with X-rays. Further, when the error image is displayed in Step S1002, the user can be urged to replace the partition film 114. The present disclosure is particularly suitable when the irradiation chamber 104 is filled with air and the inside of the irradiation chamber 104 is a vacuum. When the partition film 114 is damaged in this case, the air inside of the irradiation chamber 104 suddenly flows into the irradiation chamber 104. At this time, each component (for example, the detector 120) arranged in the irradiation chamber 104 can be prevented from being temporarily subjected to a large pressure and being damaged.

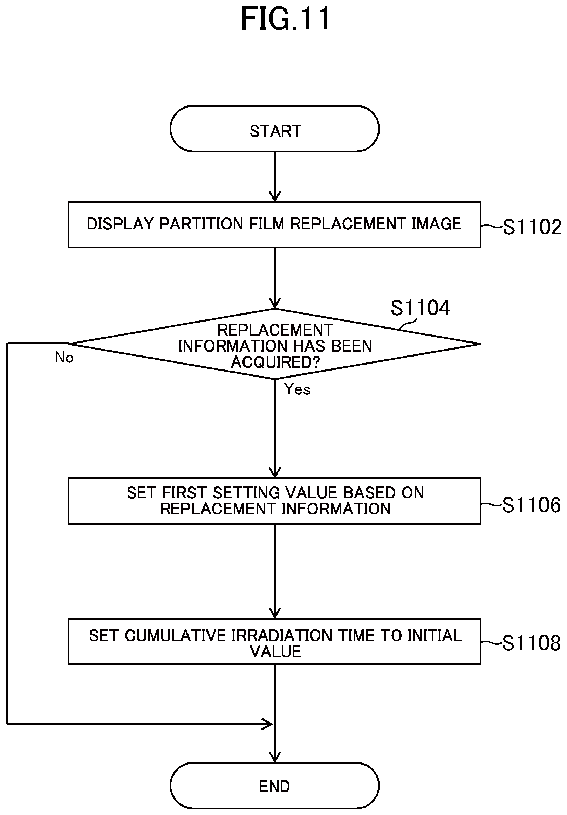

FIG. 11 is a flow chart to be executed when the partition film 114 is replaced. The user replaces the partition film 114 when the error image is displayed.

First, the display unit 206 displays the partition film replacement image (Step S1102). Specifically, the display unit 206 displays the partition film replacement image as illustrated in FIG. 6. After the user replaces the partition film 114 held by the window frame member 126, the user operates the input/output unit 208 such as a mouse to select the information on the partition film 114 after replacement corresponding to the partition film 114 after replacement from among the candidates. When an OK button of the partition film replacement image is further clicked, the replacement information acquisition unit 502 acquires replacement information including the selected information on the partition film 114.

Next, when the replacement information acquisition unit 502 acquires the replacement information (Yes in Step S1104), the first setting value is set based on the information on the partition film 114 included in the replacement information (Step S1106). For example, when the information on the partition film 114 represents that the material is polypropylene and the thickness is 3.0 µm, a first setting value of 24 H is set. When the information on the partition film 114 includes information related to the second setting value, the second setting value may be set.

Further, the cumulative irradiation time is set to the initial value (Step S1108). Specifically, the control unit 508 sets the cumulative irradiation time stored in the storage unit 204 to the initial value (0 H). The irradiation time is added to the cumulative irradiation time in accordance with the time for which X-rays are applied, but the initial value is not set for each measurement. Accordingly, the irradiation time is continuously added to the cumulative irradiation time unless the partition film 114 is replaced. According to the present disclosure, the initial value of the cumulative irradiation time is set in this step, and hence a cumulative time for which one partition film 114 is irradiated with X-rays can be managed. That is, the degree of deterioration of the partition film 114 can be grasped by measuring the cumulative irradiation time.

Even when the partition film replacement image is displayed, in a case where the partition film 114 is not replaced, the replacement information is not acquired in Step S1104. In this case, the first setting value and the cumulative irradiation time are not updated.

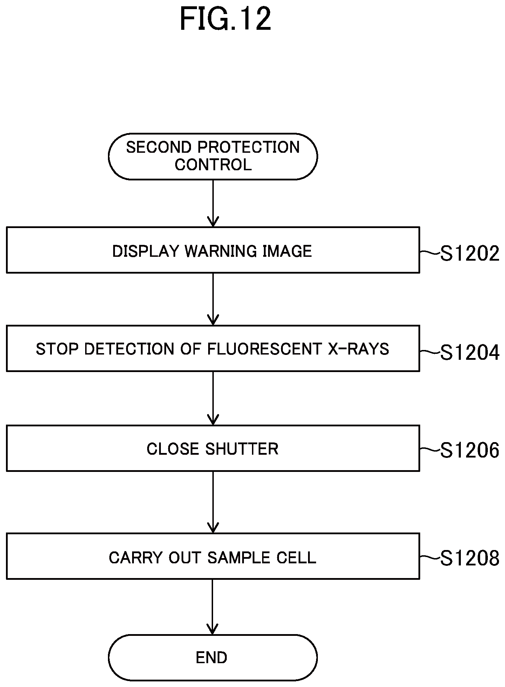

FIG. 12 is a flow chart illustrating the second protection control. When it is determined in Step S714 that the continuous irradiation time exceeds the second setting value, the control unit 508 executes the second protection control (Step S716). First, the display unit 206 displays the warning image (Step S1202). The warning image indicates that it is required to temporarily stop the measurement.

Next, the detection of fluorescent X-rays is stopped (Step S1204). Specifically, the counter 110 stops transmission of the intensity of the fluorescent X-rays to the information processing device 112.

Then, the control unit 508 closes the shutter 108 (Step S1206) and carries out the sample cell 122 (Step S1208). When the sample cell 122 is carried out, the lid member 130 is opened.

Air is present inside of the lid member 130, and hence some of the oxygen contained in the air changes to ozone while the sample is irradiated with X-rays. Accordingly, when the continuous irradiation time is long, the ozone concentration inside of the lid member 130 increases. When the measurement is continued in a state where the ozone concentration inside of the lid member 130 is high, it is highly possible that the partition film 114 will be damaged even when the cumulative irradiation time does not exceed the first setting value.

When the sample cell 122 is temporarily carried out to the preparation chamber in a case where the continuous irradiation time exceeds the second setting value, the ozone concentration inside of the lid member 130 can be decreased. Accordingly, the partition film 114 can be prevented from being damaged in a time that is shorter than the first setting value. Further, in the second protection control, the X-ray source 116 is put into the OFF state. Accordingly, re-measurement can be immediately and continuously performed.

The present disclosure can be variously modified without being limited to the above-mentioned embodiment. The configuration of the X-ray fluorescence spectrometer 100 described above is described as one example, and the present disclosure is not limited thereto. The configuration described in the above-mentioned embodiment may be replaced by a configuration that is substantially the same as the configuration described in the above-mentioned embodiment, a configuration that exhibits the same action and effect as those of the configuration described in the above-mentioned embodiment, or a configuration that achieves the same object as that of the configuration described in the above-mentioned embodiment.

For example, in the flow chart illustrated in FIG. 7, the determinations of Step S710 and Step S714 are made during the measurement. Accordingly, when Yes is determined in Step S710 and Step S714 while the measurement is executed based on one measurement condition, the measurement is interrupted. However, the determinations of Step S710 and Step S714 may also be made after the measurement based on each measurement condition is completed. That is, Step S718 and Step S720 may be performed between Step S708 and Step S710.

Further, FIG. 7 is an example of a flow chart given as an example to perform protection control while performing measurement based on a plurality of measurement conditions, and the present disclosure is not limited thereto as long as the protection control can be performed based on the irradiation time. For example, as long as the irradiation time for which the sample is irradiated with X-rays can be measured, the timing of when to put the X-ray source 116 in the ON state or the OFF state, the timing to open or close the shutter, and the timing to carry the sample cell in or out are design matters that may be changed as appropriate.

### Reference Signs List

100 X-ray fluorescence spectrometer, 102 sample chamber, 104 irradiation chamber, 106 division wall, 108 shutter, 110 counter, 112 information processing device, 114 partition film, 116 X-ray source, 118 spectroscopic device, 120 detector, 122 sample cell, 124 sample base, 126 window frame member, 128 film supporting member, 130 lid member, 132 lower holding portion, 134 upper holding portion, 202 arithmetic unit, 204 storage unit, 206 display unit, 208 input/output unit, 210 internal bus, 502 replacement information acquisition unit, 504 irradiation time acquisition unit, 506 measurement condition acquisition unit, 508 control unit, 510 analysis unit

## Claims

1. An X-ray fluorescence spectrometer, comprising:
a sample chamber in which a sample is to be arranged;
an irradiation chamber divided from the sample chamber by a partition wall partially including a partition film which transmits X-rays, the irradiation chamber having arranged therein an X-ray source configured to emit X-rays to the sample via the partition film; and
an information processing device,
wherein the information processing device includes:
an irradiation time acquisition unit configured to acquire an irradiation time for which the partition film is irradiated with the X-rays; and
a control unit configured to perform protection control of protecting the partition film from irradiation with the X-rays based on the irradiation time acquired by the irradiation time acquisition unit.

2. The X-ray fluorescence spectrometer according to claim 1,
wherein the information processing device includes a replacement information acquisition unit configured to acquire replacement information representing that the partition film has been replaced,
wherein the irradiation time acquisition unit is configured to measure a cumulative irradiation time that is a cumulative time for which the partition film is irradiated with the X-rays from when the replacement information has been acquired, and
wherein the control unit is configured to perform the protection control when the cumulative irradiation time exceeds a first setting value.

3. The X-ray fluorescence spectrometer according to claim 2,
wherein the irradiation time acquisition unit is configured to measure a continuous irradiation time that is a time for which the X-rays are continuously applied from when the irradiation of the partition film with the X-rays was started, and
wherein the control unit is configured to perform the protection control when the continuous irradiation time exceeds a second setting value.

4. The X-ray fluorescence spectrometer according to claim 1,
wherein the information processing device includes a measurement condition acquisition unit configured to acquire a measurement condition including a measurement time,
wherein the irradiation time acquisition unit is configured to calculate, based on the measurement time included in the acquired measurement condition, a predicted continuous irradiation time predicted as a time for which the partition film is irradiated with the X-rays through measurement performed in accordance with the measurement condition, and
wherein the control unit is configured to perform the protection control based on the predicted continuous irradiation time.

5. The X-ray fluorescence spectrometer according to claim 4,
wherein the information processing device further includes:
a replacement information acquisition unit configured to acquire replacement information representing that the partition film has been replaced; and
a storage unit configured to store a cumulative irradiation time that is a cumulative time for which the partition film is irradiated with the X-rays from when the replacement information has been acquired,
wherein the irradiation time acquisition unit is configured to calculate a predicted cumulative irradiation time by adding the predicted continuous irradiation time to the cumulative irradiation time stored in the storage unit, and
wherein the control unit is configured to perform the protection control when the predicted cumulative irradiation time exceeds a first setting value.

6. The X-ray fluorescence spectrometer according to claim 5, wherein the control unit is configured to perform the protection control when the predicted continuous irradiation time exceeds a second setting value.

7. The X-ray fluorescence spectrometer according to any one of claims 4 to 6, wherein the protection control is control that prevents measurement from being started.

8. The X-ray fluorescence spectrometer according to any one of claims 1 to 3, further comprising a shutter configured to isolate, in a closed state, the sample chamber and the irradiation chamber from each other and block the X-rays,
wherein the irradiation time acquisition unit is configured to measure a time for which the X-ray source emits the X-rays and the shutter is open as the irradiation time.

9. The X-ray fluorescence spectrometer according to claim 8, wherein the protection control is control of closing the shutter.

10. The X-ray fluorescence spectrometer according to any one of claims 1 to 3, wherein the protection control is control of causing the X-ray source to stop emission of the X-rays.

11. The X-ray fluorescence spectrometer according to any one of claims 1 to 6,
wherein the information processing device includes a display unit configured to perform display based on control of the control unit, and
wherein the protection control is control of causing the display unit to display that the partition film has a possibility of being damaged.

12. The X-ray fluorescence spectrometer according to claim 3 or 6,
wherein the replacement information includes information representing a material and/or a thickness of the replaced partition film, and
wherein the first setting value and/or the second setting value is set based on the information representing the material and/or the thickness.

13. The X-ray fluorescence spectrometer according to claim 11, wherein the display unit is further configured to display the cumulative irradiation time and/or the continuous irradiation time.

14. A non-transitory computer-readable information storage medium having stored thereon a program to be executed by a computer used for an X-ray fluorescence spectrometer,
the X-ray fluorescence spectrometer including:
a sample chamber in which a sample is to be arranged;
an irradiation chamber divided from the sample chamber by a partition wall partially including a partition film which transmits X-rays, the irradiation chamber having arranged therein an X-ray source configured to emit X-rays to the sample via the partition film; and
the computer,
the program causing the computer to execute:
an irradiation time acquisition step of acquiring an irradiation time for which the partition film is irradiated with the X-rays; and
a protection control step of performing protection control of protecting the partition film from irradiation with the X-rays based on the irradiation time acquired in the irradiation time acquisition step.

15. A program to be executed by a computer used for an X-ray fluorescence spectrometer,
the X-ray fluorescence spectrometer including:
a sample chamber in which a sample is to be arranged;
an irradiation chamber divided from the sample chamber by a partition wall partially including a partition film which transmits X-rays, the irradiation chamber having arranged therein an X-ray source configured to emit X-rays to the sample via the partition film; and
the computer,
the program causing the computer to execute:
an irradiation time acquisition step of acquiring an irradiation time for which the partition film is irradiated with the X-rays; and
a protection control step of performing protection control of protecting the partition film from irradiation with the X-rays based on the irradiation time acquired in the irradiation time acquisition step.

## Amended claims

### Amended claims under Art. 19.1 PCT

**1.** Currently amended] An X-ray fluorescence spectrometer, comprising:
a sample chamber in which a sample is to be arranged;
an irradiation chamber divided from the sample chamber by a partition wall partially including a partition film which transmits X-rays, the irradiation chamber having arranged therein an X-ray source configured to emit X-rays to the sample via the partition film; and
an information processing device,
wherein the information processing device includes:
a measurement condition acquisition unit configured to acquire a measurement condition including a measurement time;
an irradiation time acquisition unit configured to calculate, based on the measurement time included in the acquired measurement condition, a predicted continuous irradiation time predicted as a time for which the partition film is irradiated with the X-rays through measurement performed in accordance with the measurement condition, and acquire an irradiation time for which the partition film is irradiated with the X-rays; and
a control unit configured to perform protection control of protecting the partition film from irradiation with the X-rays based on the irradiation time acquired by the irradiation time acquisition unit and the predicted continuous irradiation time.

**2.** The X-ray fluorescence spectrometer according to claim 1,
wherein the information processing device includes a replacement information acquisition unit configured to acquire replacement information representing that the partition film has been replaced,
wherein the irradiation time acquisition unit is configured to measure a cumulative irradiation time that is a cumulative time for which the partition film is irradiated with the X-rays from when the replacement information has been acquired, and
wherein the control unit is configured to perform the protection control when the cumulative irradiation time exceeds a first setting value.

**3.** The X-ray fluorescence spectrometer according to claim 2,
wherein the irradiation time acquisition unit is configured to measure a continuous irradiation time that is a time for which the X-rays are continuously applied from when the irradiation of the partition film with the X-rays was started, and
wherein the control unit is configured to perform the protection control when the continuous irradiation time exceeds a second setting value.

**5.** Currently amended] The X-ray fluorescence spectrometer according to claim 1,
wherein the information processing device further includes:
a replacement information acquisition unit configured to acquire replacement information representing that the partition film has been replaced; and
a storage unit configured to store a cumulative irradiation time that is a cumulative time for which the partition film is irradiated with the X-rays from when the replacement information has been acquired,
wherein the irradiation time acquisition unit is configured to calculate a predicted cumulative irradiation time by adding the predicted continuous irradiation time to the cumulative irradiation time stored in the storage unit, and
wherein the control unit is configured to perform the protection control when the predicted cumulative irradiation time exceeds a first setting value.

**6.** The X-ray fluorescence spectrometer according to claim 5, wherein the control unit is configured to perform the protection control when the predicted continuous irradiation time exceeds a second setting value.

**7.** Currently amended] The X-ray fluorescence spectrometer according to any one of claims 1, 5, and 6, wherein the protection control is control that prevents measurement from being started.

**8.** The X-ray fluorescence spectrometer according to any one of claims 1 to 3, further comprising a shutter configured to isolate, in a closed state, the sample chamber and the irradiation chamber from each other and block the X-rays,
wherein the irradiation time acquisition unit is configured to measure a time for which the X-ray source emits the X-rays and the shutter is open as the irradiation time.

**9.** The X-ray fluorescence spectrometer according to claim 8, wherein the protection control is control of closing the shutter.

**10.** The X-ray fluorescence spectrometer according to any one of claims 1 to 3, wherein the protection control is control of causing the X-ray source to stop emission of the X-rays.

**11.** Currently amended] The X-ray fluorescence spectrometer according to any one of claims 1 to 3, 5, and 6,
wherein the information processing device includes a display unit configured to perform display based on control of the control unit, and
wherein the protection control is control of causing the display unit to display that the partition film has a possibility of being damaged.

**12.** The X-ray fluorescence spectrometer according to claim 3 or 6,
wherein the replacement information includes information representing a material and/or a thickness of the replaced partition film, and
wherein the first setting value and/or the second setting value is set based on the information representing the material and/or the thickness.

**13.** Currently amended] The X-ray fluorescence spectrometer according to any one of claims 2, 3, 5, and 6,
wherein the information processing device includes a display unit configured to perform display based on control of the control unit,
wherein the protection control is control of causing the display unit to display that the partition film has a possibility of being damaged, and
wherein the display unit is configured to display the cumulative irradiation time and/or the continuous irradiation time.

**14.** Currently amended] A non-transitory computer-readable information storage medium having stored thereon a program to be executed by a computer used for an X-ray fluorescence spectrometer,
the X-ray fluorescence spectrometer including:
a sample chamber in which a sample is to be arranged;
an irradiation chamber divided from the sample chamber by a partition wall partially including a partition film which transmits X-rays, the irradiation chamber having arranged therein an X-ray source configured to emit X-rays to the sample via the partition film; and
the computer,
the program causing the computer to execute:
a measurement condition acquisition step of acquiring a measurement condition including a measurement time;
a step of calculating, based on the measurement time included in the acquired measurement condition, a predicted continuous irradiation time predicted as a time for which the partition film is irradiated with the X-rays through measurement performed in accordance with the measurement condition;
an irradiation time acquisition step of acquiring an irradiation time for which the partition film is irradiated with the X-rays; and
a protection control step of performing protection control of protecting the partition film from irradiation with the X-rays based on the irradiation time acquired in the irradiation time acquisition step and the predicted continuous irradiation time.

**15.** Currently amended] A program to be executed by a computer used for an X-ray fluorescence spectrometer,
the X-ray fluorescence spectrometer including:
a sample chamber in which a sample is to be arranged;
an irradiation chamber divided from the sample chamber by a partition wall partially including a partition film which transmits X-rays, the irradiation chamber having arranged therein an X-ray source configured to emit X-rays to the sample via the partition film; and
the computer,
the program causing the computer to execute:
a measurement condition acquisition step of acquiring a measurement condition including a measurement time;
a step of calculating, based on the measurement time included in the acquired measurement condition, a predicted continuous irradiation time predicted as a time for which the partition film is irradiated with the X-rays through measurement performed in accordance with the measurement condition;
an irradiation time acquisition step of acquiring an irradiation time for which the partition film is irradiated with the X-rays; and
a protection control step of performing protection control of protecting the partition film from irradiation with the X-rays based on the irradiation time acquired in the irradiation time acquisition step and the predicted continuous irradiation time.

Statement under Art. 19.1 PCT
As for claims 1, 14, and 15, the following points have been made clear: the point of acquiring the measurement condition including the measurement time; the point of calculating, based on the measurement time included in the acquired measurement condition, the predicted continuous irradiation time predicted as the time for which the partition film is irradiated with the X-rays through measurement performed in accordance with the measurement condition; and the point of performing the protection control based on the predicted continuous irradiation time.

Claim 1 is on the basis of claims 1 and 4 as filed and matters described in paragraphs [0049], [0050], [0053], [0063], [0064], and others of the specification as filed.

Claim 2 is on the basis of claim 2 as filed.

Claim 3 is on the basis of claim 3 as filed.

Claim 5 is on the basis of claim 5 as filed.

Claim 6 is on the basis of claim 6 as filed.

Claim 7 is on the basis of claim 7 as filed.

Claim 8 is on the basis of claim 8 as filed.

Claim 9 is on the basis of claim 9 as filed.

Claim 10 is on the basis of claim 10 as filed.

Claim 11 is on the basis of claim 11 as filed.

Claim 12 is on the basis of claim 12 as filed.

Claim 13 is on the basis of claim 13 as filed.

Claim 14 is on the basis of claims 14 and 4 as filed and matters described in paragraphs [0049], [0050], [0053], [0063], [0064], and others of the specification as filed.

Claim 15 is on the basis of claims 15 and 4 as filed and matters described in paragraphs [0049], [0050], [0053], [0063], [0064], and others of the specification as filed.

The point of acquiring the measurement condition including the measurement time, the point of calculating, based on the measurement time included in the acquired measurement condition, the predicted continuous irradiation time predicted as the time for which the partition film is irradiated with the X-rays through measurement performed in accordance with the measurement condition, and the point of performing the protection control based on the predicted continuous irradiation time, which are limitations described in the inventions according to claims 1, 14, and 15, are not described in Documents 1 to 3, and are not obvious to a person skilled in the art on the basis of the descriptions of Documents 1 to 3. In addition, the inventions according to claims 1, 14, and 15 have such a special effect that, with the protection control being performed based on the predicted continuous irradiation time, the damage of the partition film and the damage or contamination of the component arranged in the irradiation chamber are prevented, and thus have inventive step.
